# EUROPEAN PATENT SPECIFICATION

(11) **EP 0 476 216 B1**
(45) Date of publication and mention of the grant of the patent: **14.12.1994**
(21) Application number: 91101182.3
(22) Date of filing: 30.01.1991
(51) Int. Cl.: B65G 33/32, B65G 33/38

(54) **Screw feeder**
Schneckenförderer
Transporteur à vis

(30) Priority: 17.09.1990 JP 248001/90
(43) Date of publication of application: 25.03.1992
(73) Proprietor: Tokyo Automatic Machinery Works Limited, Chiyoda-ku, Tokyo 101 (JP)
(72) Inventor: Kondo, Fumio, Ken-ei jyuutaku 3-301, Nagareyama-shi, Chiba-ken (JP)
(74) Representative: Denmark, James

(56) References cited:
- WO-A-86/03180
- AT-B- 248 961
- DE-A- 3 608 551
- DE-C- 629 358
- US-A- 701 636

## Description

### 1. Technical Field of the Invention

The present invention generally relates to a screw feeder which is adapted to be installed, e.g. in a bag producing, filling and packaging machine for transporting fluent material such as food, medicine or other products in a sanitary fashion. The present invention more particularly relates to a screw feeder which can be used with an apparatus having an outer pipe which is positioned vertically at the lower end of a hopper; wherein the screw feeder includes a screw shaft positioned in the outer pipe so as to transport e.g. a particulate substance or a gel-like substance by rotating a driving shaft which is connected to the screw shaft.

### 2. Discussion of Background Information

Conventional types of screw feeders, as noted above, have a screw shaft and a driving shaft, with a driving shaft end and the screw feeder end being connected to each other by means of a screw. Each time the particulate substance or the gel-like substance to be transported is changed, or the amount of material fed at any given moment is changed, the screw can become loose, and the screw shaft can then be separated from the driving shaft, so that the screw shaft may have to be replaced or cleaned.

### OBJECTS OF THE INVENTION

However, when utilizing a conventional screw feeder as described above, because the screw shaft and the driving shaft are connected to each other by a screw, it is possible that the screw can become loose and/or come off upon rotation of the two shafts. It is thus also possible for trouble to occur if the loosened screw is mixed into the particulate or gel-like substance which is being transported. Additional problems arise in that, since the head of the screw shaft often partially extends into the hopper, the particulate substance or gel-like substance will likely stick around the screw; as a result, such screws have inferior sanitary properties. Further, in such a case, in order to turn the screw, it is necessary to insert a tool into the hopper, with the resultant relatively low operability. In other words, it is difficult to rotate the screw (when necessary or desired) without the awkward placement of a tool into the hopper.

It is known from prior specifications US-A-701636, AT-B-248961, WO-A-86/03180 and DE-C-629358 that driving shafts can be connected to screw shafts with means other than screws but these arrangements are not suitable for a particular one of the applications to which the present invention relates.

It is therefore an object of the present invention to detachably connect a screw shaft and a driving shaft to each other without using a detachable screw.

### SUMMARY OF THE INVENTION

According to the present invention there is provided a screw feeder for feeding fluent material comprising a shaft assembly made up of a drive shaft releasably connected end to end with a feed shaft, said feed shaft having a feed screw thereon, the drive shaft 1 and feed screw being connected by a releasable coupling characterised in that said coupling comprises a shaft end on one of said shafts, a socket end on the ajacent end of the other of said shafts, said shaft end being received in the socket end and a wedge sleeve located between the shaft end and the socket end which is removable axially of the shaft assembly between a first position in which the sleeve wedges between the socket end and the shaft end and drivingly connects them together, and a second position in which the wedging effect is released, and the shaft end can be removed from the socket end and the shafts can be released from one another.

Preferably said drive shaft comprises a tube with a generally cylindrical connecting rod forming means for moving said sleeve and positioned within the said tube.

Preferably, there is also a screw feeder means for moving said connecting rod generally axially within said tube, and said means comprise a nut adapted to engage an outer circumferential face of the opposite end of said connecting rod from said sleeve, said nut 6 comprising rotatable means for moving said sleeve axially via connection of said sleeve with said connecting rod.

It is preferred that said connecting rod is integral with said sleeve and said sleeve has a plurality of generally axial slits which split the sleeve into a plurality of substantially parallel circumferential portions, and further advantage results when said sleeve has an outer tapered surface which is adapted to engage the inner surface of the socket end. In this connection the socket end may have a generally frustoconical inner wall surface, the diameter of said frustoconical surface gradually increasing in a direction towards said drive shaft and adapted to engage said outer tapered surface on the sleeve.

Said driving shaft socket end tapered inner surface may have a minimum inner diameter which is subtantially equal to the minimum outer diameter of the outer tapered surface of said sleeve and, said tapered inner surface and said tapered outer surface each has substantially the same angle of inclination; it is also preferred that the frustoconical surface of said socket end has a length which is greater than the length of the tapered surface of said sleeve so that a radial gap exists between the outer tapered surface of said sleeve and the inner frustoconical surface of said socket end

According to another preferred feature of the invention, the coupling further comprises two generally annular members, namely a first generally angular member provided at said socket end, said first annular member having opposed generally L-shaped slots, and the second generally angular member having two inwardly projecting pins protruding radially inwardly from an inner surface of said second annular member, each of said two inwardly directed pins being adapted to be detachably engaged and retained by respective L-shaped slots.

Said second annular member may comprise first and second opposed generally cylindrical openings which are adapted to be aligned with a generally cylindrical bore located in said shaft end of said screw shaft, said screw feeder further comprising an elongated locking pin which is adapted to be inserted through said opposed openings and said bore in order to position said second annular member on said shaft end.

### BRIEF DESCRIPTION OF DRAWINGS

The above-noted advantages, features and objects of the present invention are more fully discussed hereinafter with respect to the following drawings, wherein like reference numerals are used to describe similar parts in the several views, and wherein:
Fig. 1 is a vertical, sectional, front-elevational view of a first embodiment of a screw feeder having a screw shaft connected to a drive shaft;
Fig. 2 is an exploded, vertical sectional view showing, in partially enlarged fashion, a position in which the screw shaft is not connected to a drive shaft; and
Fig. 3 is a fragmentary, exploded perspective view of essential components of the screw feeder of Figs. 1 and 2.

### DETAILED DESCRIPTION OF THE DRAWINGS

Referring to the drawings in further detail, one embodiment of the present invention will be described with specific reference to the drawings.

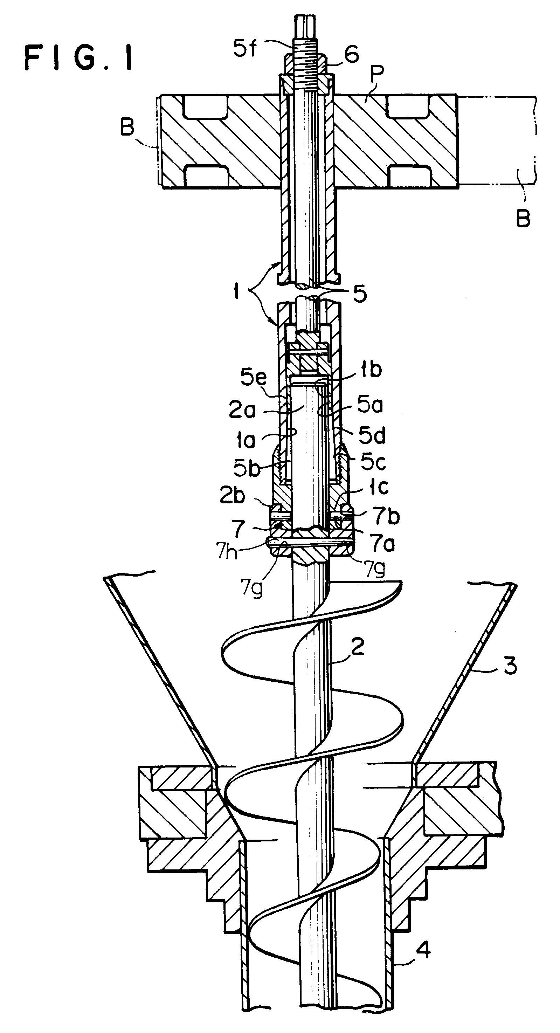

As shown in Fig. 1, a pulley P is provided along an upper portion of a tubular driving shaft 1 which is formed in a cylindrical shape. Power from a driving source is transmitted by belt B to rotate driving shaft 1 and a screw shaft 2 which is adapted to be detachably connected to a lower end of the driving shaft so that the driving shaft 1 and screw shaft 2 form a shaft assembly.

Rotation of the assembly enables a fluent material such as a particulate or gel-like substance, e.g. in hopper 3, to be transported, in a fixed amount, through the spacing which exists between the screw shaft 2 and the cylindrical outer pipe 4.

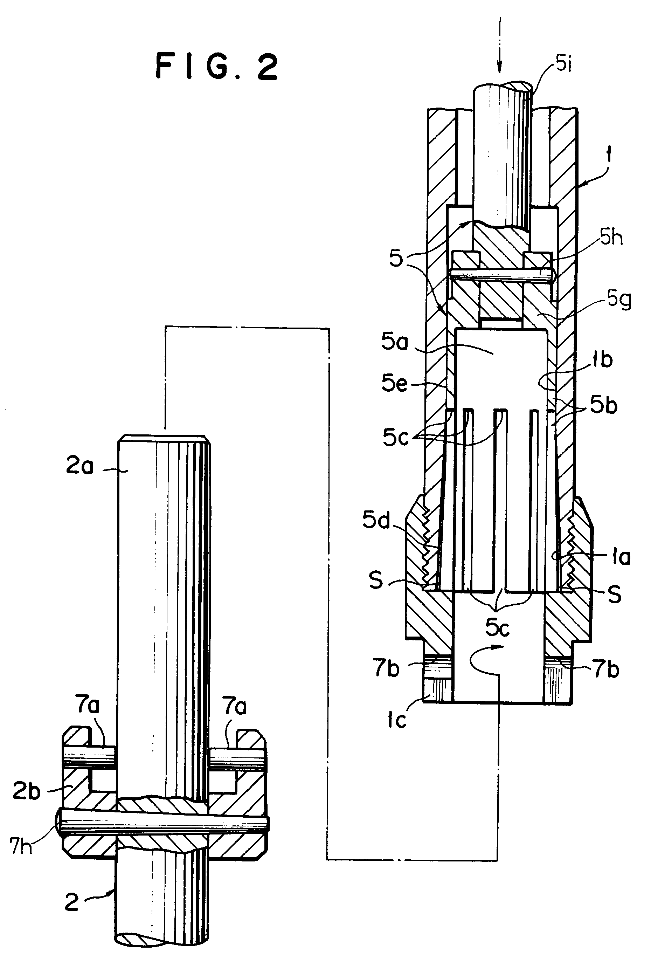

A connecting rod 5 is mounted for upward and downward reciprocating movement along the inside of a tubular driving shaft 1. At the lower end the shaft 1 defines a socket housing 1a (see Fig. 2) provided for engaging an outer frustoconical surface of a lower portion in the form of a sleeve 5a of the connecting rod 5. The tapered surface 1a is formed on an inner circumferential surface of the lower portion of the driving shaft 1, and the inner diameter of the tapered portion gradually increases in a downwards direction (see Fig. 1). A nut 6 engages an outer threaded circumferential face 5f of an upper portion of connecting rod 5 at an upper end of drive shaft 1. The nut can be rotated/turned, but cannot be moved either upwardly or downwardly so that turning of the nut 6 effects raising or lowering of the connecting rod 5 and the sleeve 5a. As shown in Fig. 2, an upper solid portion 5i of the connecting rod is attached to lower part 5g which includes sleeve 5a by a frustoconical locking pin 5h, which extends through aligned openings (unreferenced) in the two parts.

Sleeve 5a has substantially the same diameter shaft as end 2a of shaft 3, which is the upper end of screw shaft 2, and is provided with slits 5c, which divide the sleeve wall 5b circumferentially into a plurality of portions, extending axially from the lower end of connecting rod 5. A portion 5d of the sleevehas an outer frustoconical surface which is arranged in opposed relation to the tapered surface 1a of the drive shaft socket end. The outer diameter of the frustoconical surface gradually increases in a downward direction in Fig. 1.

Tapered surface 1a and frustoconical surface 5d are formed so that the minimum diameter of the tapered surface 1a, and the minimum diameter of the frustoconical face portion 5d, are substantially the same; and so that the inclination angle of tapered surface 1a and that of frustoconical surface 5d are substantially the same. The tube 1 has an inner diamgere tubular surface 1b which is provided contiguous with and above the tapered surface 1a, which is adapted slidably to receive outer tubular surface 5e, of the sleeve 5a. Surface 5a is contiguous with and above conical surface 5d. Surface 5e is contiguous with and above conical surface 5d. The outer diameter of the tubular surface 5e is substantially equal to the inner diameter of tube surface 1b, except for a small clearance between these sections in order to permit upward and downward sliding movement. The vertical length of the tapered surface 1a is made greater than the length of the conical surface 5d, so that the maximum inner diameter of tapered surface 1a will be greater than the maximum outer diameter of frustoconical surface 5d.

Accordingly, when the maximum outer diameter portion of the frustoconical surface 5d is opposite the maximum inner diameter portion of the tapered surface 1a, during downward movement of connecting rod 5, a gap S is formed between the conical surface 5d and the tapered surface 1a which allows the sleeve 5b to be expanded, due to the existence of slits 5c.

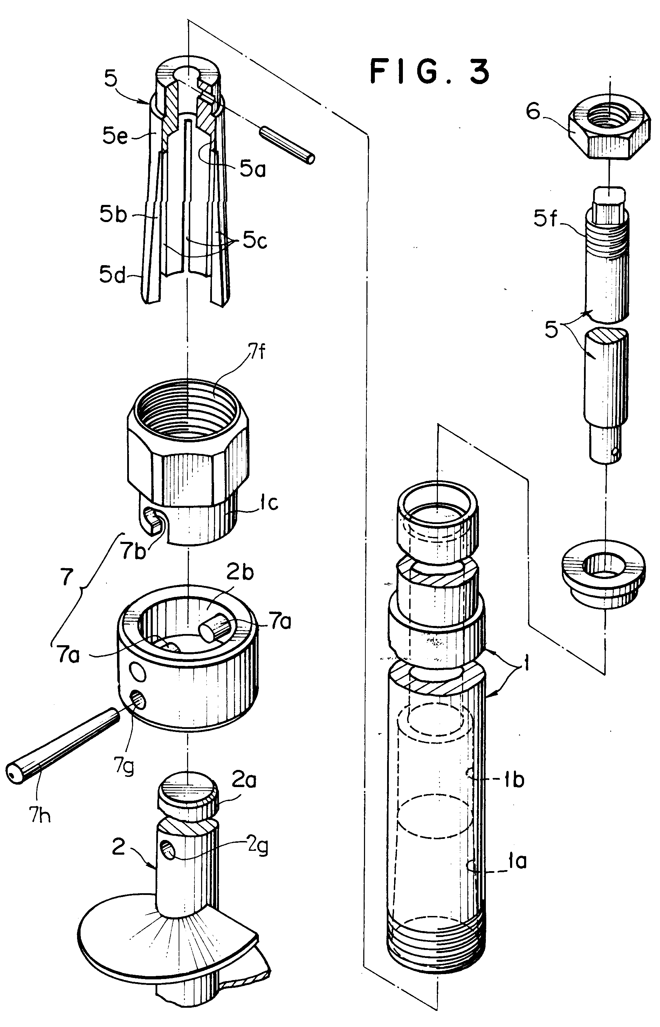

Further, a secondary detachable fastening mechanism 7 between driving shaft 1 and screw shaft 2 is provided. The secondary fastening mechanism 7 comprises two annular members 2b, 1c, as shown in Fig. 3. Pins 7a of member 2b extend in a direction perpendicular to the direction of the common axis of driving shaft 1 and screw shaft 2. Each pin is adapted to engage a corresponding recess (bayonet slot) 7b on member 1c.

Annular member 1c includes an internally threaded portion 7f, which is threaded onto the exterior lower threaded portion of driving shaft 1 (see Figs. 1 and 2). The lower annular member 2b includes two inwardly protruding locking pins 7a,7a, and two through holes 7g,7g which are diametrically aligned and which are adapted to receive a frustoconical locking pin 7h, which extends through holes 7g,7g and through bore 2g in screw shaft 2, as shown in Figs. 1 and 2.

In the present embodiment of the invention, a pair of inverted L-shaped recesses 7b,7b are formed along a diagonal/diametric line in a circumferential wall of the lower portion of pipe body 1c, which pipe body is screwed onto the lower end of driving shaft1 as shown in Fig. 3. The cylindrical body 2b, adapted to be interfit with body 1c in the axial direction and with a lower end of pipe body 1c, is securely mounted on an upper portion of screw shaft 2 by locking pin 7h. Horizontal pins 7a of member 2b, project inwardly along a diagonal line from an inner surface of a circumferential wall of cylindrical body 2b, and towards recesses 7b,7b (when the driving shaft and screw shaft are attached).

The method of connecting and detaching driving shaft 1 and screw shaft 2 will be described in detail.

Initially, with the shafts 1 and 2 separated, but the bodies 1c and 2b connected to their respective shafts as shown in Fig. 2, nut 6 is manually turned so as to move connecting rod 5 downwardly so that a gap S is formed between the frustoconical surface 5d and the tapered surface 1a of shaft 1, as shown in Fig. 2.

Next, base end 2a of screw shaft 2 is inserted into socket end 5a, until pins 7a,7a are individually fitted into recesses 7b,7b, whereafter screw shaft 2 is pushed upwardly, the circumferential wall 5b of recessed portion 5a expanding as necessary to accommodate shaft end 2a which engages the inner circumferential surface of circumferential wall 5b. Next screw shaft 2 is then turned so that pins 7a,7a are individually moved in a circumferential direction along recesses 7b,7b, whereby they are released in an axial direction, and are temporarily fastened within the recesses 7b,7b.

To couple the shafts 1,2 securely the nut 6 is turned manually so as to move connecting rod 5 upwardly, and conical surface 5d is moved upwardly via an upward movement so that the sleeve 5a fits in a wedge-like fashion between the outer circumferential face of shaft end 2a of screw shaft 2, and the tapered surface 1a, as shown in Fig. 1, thereby screw shaft 2 and driving shaft 1 are securely connected to each other by way of circumferential wall 5b of sleeve 5a so that the "three" i.e. the screw shaft, driving shaft, and connecting rod, will be integrally connected to one another.

Accordingly, if driving shaft 1 is then rotated, both connecting rod 5 and screw shaft 2 will be rotated so as to transport/move a particulate or gel-like substance which may be present in the form of a gel in hopper 3.

Conversely, screw shaft 2 can be disconnected from the driving shaft 1 and connecting rod 5, and can be separated therefrom, if the above-noted procedure is followed in a reverse fashion.

It should be noted that secondary fastening mechanism 7 need not be the only one which need be provided, and that the structure of the present invention is not necessarily limited to that which is shown in the attached drawings.

With the above-noted structure, the present invention has numerous advantages over the prior art, in particular in that when the base end of the screw shaft is pushed into the sleeve in such a way that the connecting rod is moved toward the screw shaft, and the frustoconical surface and the tapered surface are not engaged with each other but instead have a gap between them, then the circumferential wall of the sleeve can be expanded so that the connecting rod will be fitted into the recessed portion of the drive shaft. Then, if the connecting rod is moved in an opposite direction, the frustoconical surface will be engaged with the tapered surface so as to compress and tighten the circumferential wall of the sleeve so that the driving shaft and the screw shaft will be integrated with each other, without using a connecting screw.

Accordingly, when compared to a conventional screw feeder in which a screw shaft and a driving shaft are connected to each other by a connecting screw, the present invention avoids the problems of having the connecting screw loosening and coming off upon rotation and also avoids the problem of the screw being mixed into the particulate or gel-like substance which is being transported. As a result, the screw feed of the present invention is safer than that of the prior art. Additionally, no screw will fall between the hopper and the screw shaft, and the substance in the hopper will thus not likely stick to the screw, thereby improving the sanitary properties of the invention. No additional tools are needed to separate the drive and screw shafts, and the operation of the system will become enhanced.

## Claims

1. A screw feeder for feeding fluent material comprising a shaft assembly made up of a drive shaft (1) releasably connected end to end with a feed shaft (2), said feed shaft (2) having a feed screw thereon, the drive shaft (1) and feed screw (2) being connected by a releasable coupling (2a, 1a), characterised in that said coupling (2a, 1a) comprises a shaft end (2a) on one (2) of said shafts, a socket end (1a) on the ajacent end of the other (1) of said shafts, said shaft end (2a) being received in the socket end (1a) and a wedge sleeve (5a) located between the shaft end (2a) and the socket end (1a) which is removable axially of the shaft assembly between a first position in which the sleeve (5a) wedges between the socket end (1a) and the shaft end (2a) and drivingly connects them together, and a second position in which the wedging effect is released, and the shaft end (2a) can be removed from the socket end (1a) and the shafts (1, 2) can be released from one another.

2. A screw feeder in accordance with Claim 1, characterised in that said drive shaft (1) comprises a tube (1) with a generally cylindrical connecting rod (5) forming means for moving said sleeve (5a) and positioned within the said tube (1).

3. A screw feeder in accordance with Claim 2, characterised by means (6) for moving said connecting rod (5) generally axially within said tube.

4. A screw feeder in accordance with Claim 3, characterised in that said means (6) comprises a nut (6) adapted to engage an outer circumferential face of the opposite end of said connecting rod (5) from said sleeve (5a), said nut (6) comprising rotatable means for moving said sleeve (5a) axially via connection of said sleeve (5a) with said connecting rod (5).

5. A screw feeder in accordance with Claim 4, characterised in that said connecting rod (5) is integral with said sleeve (5a) and said sleeve (5a) has a plurality of generally axial slits (5c) which split the sleeve (5a) into a plurality of substantially parallel circumferential portions.

6. A screw feeder in accordance with any preceding claim, characterised in that said sleeve (5a) has an outer tapered surface (5d) which is adapted to engage the inner surface of the socket end (1a).

7. A screw feeder in accordance with Claim 6, characterised in that the socket end has a generally frustoconical inner wall surface, the diameter of said frustoconical surface gradually increasing in a direction towards said drive shaft (2).

8. A screw feeder in accordance with Claim 6, characterised in that the socket end 1a has a portion (1a) with a generally frustoconical surface gradually increasing in a direction towards said drive shaft (2) and adapted to engage said outer tapered surface on the sleeve (5a).

9. A screw feeder in accordance with Claim 8, characterised in that said driving shaft socket end has a tapered inner surface having a minimum inner diameter which is subtantially equal to the minimum outer diameter of the outer tapered surface (5d) of said sleeve (5a), said tapered inner surface 1a and said tapered outer surface (5d) each having substantially the same angle of inclination.

10. A screw feeder in accordance with Claim 9, characterised in that the frustoconical surface (1a) of said socket end (1a) has a length which is greater than the length of the tapered surface of said sleeve (5a).

11. A screw feeder in accordance with Claim 9 or 10, characterised in that a radial gap (S) exists between the outer tapered surface of said sleeve (5a) and the inner frustoconical surface of said socket end (1a).

12. A screw feeder in accordance with any preceding claim, characterised in that said coupling further comprises two generally annular members (1c, 2b), a first generally angular member (1c) provided at said socket end (1a), said first annular member (1c) having opposed generally L-shaped slots (7b), and the second generally angular member (2b) having two inwardly projecting pins (7a) protruding radially inwardly from an inner surface of said second annular member (2b), each of said two inwardly directed pins (7a) being adapted to be detachably engaged and retained by respective L-shaped slots (7b).

13. A screw feeder in accordance with Claim 12, characterised in that said second annular member (7b) comprises first and second opposed generally cylindrical openings (7g) which are adapted to be aligned with a generally cylindrical bore 2g located in said shaft end (2a) of said screw shaft (2,) said screw feeder further comprising an elongated locking pin (7h) which is adapted to be inserted through said opposed openings (7g) and said bore (2g) in order to position said second annular member (2b) on said shaft end (2a).

14. A screw feeder in accordance with Claim 2 or any preceding claim when dependent upon Claim 2, characterised in that said connecting rod comprises a generally solid, cylindrical first part (5i) having a lower end with an opening extending therethrough and a second part defining said sleeve (5a), wherein a top end of said second part (5a) and a bottom end of said first part (5i) are connected to each other by a generally frustoconical pin (5h) inserted into aligned openings in said first part and said second part.

## Patentansprüche

1. Schneckenförderer zum Fördern von flüssigem Material, mit einer Wellenanordnung, die eine Antriebsweile (1) aufweist, welche lösbar mit einer Förderwelle (2) stirnseitig verbunden ist, wobei die Förderwelle (2) eine Förderschnecke trägt und die Antriebswelle (1) mit der Förderschnecke (2) mittels einer lösbaren Kupplung (2a, 1a) verbunden ist, **dadurch gekennzeichnet**, daß die Kupplung (2a, 1a) ein Wellenende (2a) an einer (2) der beiden Wellen sowie ein Muffenende an dem angrenzenden Ende der anderen (1) der beiden Wellen umfaßt, daß das Wellenende (2a) von dem Muffenende aufgenommen wird, und daß eine Keilbuchse (5a) zwischen dem Wellenende (2a) und dem Muffenende angebracht ist, welche in Achsrichtung der Wellenanordnung zwischen einer ersten Position, in welcher sich die Buchse (5a) zwischen dem Muffenende und dem Wellenende (2a) verkeilt und diese Teile kraftschlüssig miteinander verbindet, und einer zweiten Position, in welcher die Keilwirkung beseitigt ist, entfernbar ist, worauf das Wellenende (2a) aus dem Muffenende herausgezogen und die Wellen (1, 2) voneinander gelöst werden können.

2. Schneckenförderer nach Anspruch 1, **dadurch gekennzeichnet**, daß die Antriebswelle (1) ein Rohr (1) mit einer im wesentlichen zylindrischen Verbindungsstange (5) umfaßt, welche ein Mittel zum Bewegen der Buchse (5a) bildet und innerhalb des Rohrs (1) angeordnet ist.

3. Schneckenförderer nach Anspruch 2, **gekennzeichnet durch** eine Einrichtung (6) zum Bewegen der Verbindungsstange (5) im wesentlichen axial innerhalb des Rohrs (1).

4. Schneckenförderer nach Anspruch 3, **dadurch gekennzeichnet**, daß die Einrichtung (6) eine Mutter (6) umfaßt, welche in Wirkverbindung mit einer äußeren Umfangsfläche des der Buchse (5a) gegenüberliegenden Endes der Verbindungsstange (5) steht, und daß die Mutter (6) eine Drehvorrichtung aufweist, um die Buchse (5a) über deren Verbindung mit der Verbindungsstange (5) axial zu bewegen.

5. Schneckenförderer nach Anspruch 4, **dadurch gekennzeichnet**, daß die Verbindungsstange (5) eine bauliche Einheit mit der Buchse (5a) bildet, und daß die Buchse (5a) eine Vielzahl von im wesentlichen axialen Schlitzen (5c) aufweist, welche die Buchse (5a) in eine Vielzahl von im wesentlichen parallelen Umfangsabschnitten teilen.

6. Schneckenförderer nach einem der vorhergehenden Ansprüche, **dadurch gekennzeichnet**, daß die Buchse (5a) eine äußere Kegelfläche (5d) aufweist, welche in Wirkverbindung mit der Innenfläche des Muffenendes (1a) steht.

7. Schneckenförderer nach Anspruch 6, **dadurch gekennzeichnet**, daß das Muffenende eine im wesentlichen kegelstumpfförmige Innenwandfläche aufweist, wobei der Durchmesser der kegelstumpfförmingen Fläche in Richtung zur Förderwelle (2) allmählich zunimmt.

8. Schneckenförderer nach Anspruch 6, **dadurch gekennzeichnet**, daß das Muffenende einen Abschnitt (1a) mit einer im wesentlichen kegelstumpfförmigen Fläche aufweist, welche in Richtung zur Förderwelle (2) allmählich zunimmt und zur Anlage an die äußere Kegelfläche der Buchse (5a) ausgebildet ist.

9. Schneckenförderer nach Anspruch 8, **dadurch gekennzeichnet**, daß das Muffenende (1a) der Antriebswelle (1) eine kegelförmige Innenfläche (1a) aufweist, deren kleinster Innendurchmesser im wesentlichen gleich dem kleinsten Außendurchmesser der äußeren Kegelfläche (5d) der Buchse (5a) ist, und daß die kegelförmige Innenfläche (1a) des Muffenendes (1a) und die kegelförmige Außenfläche (5d) der Buchse (5a) im wesentlichen denselben Neigungswinkel aufweisen.

10. Schneckenförderer nach Anspruch 9, **dadurch gekennzeichnet**, daß die kegelstumpfförmige Fläche (1a) des Muffenendes (1a) eine Länge aufweist, welche größer als die Länge der Kegelfläche der Buchse (5a) ist.

11. Schneckenförderer nach Anspruch 9 oder 10, **dadurch gekennzeichnet**, daß ein radialer Spalt (S) zwischen der äußeren Kegelfläche der Buchse (5a) und der inneren kegelstumpfförmigen Fläche (1a) des Muffenendes vorhanden ist.

12. Schneckenförderer nach einem der vorhergehenden Ansprüche, **dadurch gekennzeichnet**, daß die Kupplung ferner zwei im wesentlichen ringförmige Teile (1c), (2c) umfaßt, daß ein erstes, im wesentlichen ringförmiges Teil (1c) an dem Muffenende (1a) vorgesehen ist und gegenüberliegende, im wesentlichen L-förmige Schlitze (7b) aufweist, und daß das zweite im wesentlichen ringförmige Teil (2b) zwei nach innen ragende Stifte (7a) aufweist, welche von einer Innenfläche des zweiten ringförmigen Teils (2b) radial nach innen vorstehen, wobei jeder der beiden nach innen gerichteten Stifte (7a) so ausgebildet ist, daß er mit einem zugehörigen L-förmigen Schlitz in lösbaren Eingriff gebracht und von diesem festgehalten werden kann.

13. Schneckenförderer nach Anspruch 12, **dadurch gekennzeichnet**, daß das zweite ringförmige Teil (2b) erste und zweite gegenüberliegende, im wesentlichen zylindrische Öffnungen (7g) aufweist, welche mit einer im wesentlichen zylindrischen, im Wellenende (2a) der Schneckenwelle (2) angebrachten Bohrung fluchtend ausgerichtet sind, und daß der Schneckenförderer ferner einen länglichen Verriegelungsstift (7h) aufweist, welcher so ausgebildet ist, daß er durch die gegenüberliegenden Öffnungen (7g) und die Bohrung (2g) hindurchgeführt werden kann, um das zweite ringförmige Teil (2b) an dem Wellenende (2a) zu positionieren.

14. Schneckenförderer nach Anspruch 2 oder einem der vorhergehenden, von Anspruch 2 abhängigen Anspruch, **dadurch gekennzeichnet**, daß die Verbindungsstange (5) einen im wesentlichen massiven, zylindrischen ersten Abschnitt (5i) umfaßt, dessen unteres Ende eine Durchgangsbohrung aufweist, sowie einen zweiten Abschnitt umfaßt, welcher die Buchse (5a) bildet, wobei ein oberes Ende des zweiten Abschnitts (5a) und ein unteres Ende des ersten Abschnitts (5e) mittels eines im wesentlichen kegelstumpfförmigen Stiftes (5h) verbunden sind, welcher in fluchtende Öffnungen in dem ersten und dem zweiten Abschnitt eingesetzt ist.

## Revendications

1. Dispositif d'alimentation à vis destiné à fournir un matériau fluide comprenant un assemblage d'arbres constitué par un arbre d'entraînement (1) relié d'une manière amovible, bout à bout, à un arbre d'alimentation (2), ledit arbre (2) portant une vis d'alimentation, l'arbre d'entraînement (1) et la vis d'alimentation (2) étant reliés par un accouplement amovible (2a, 1a), caractérisé en ce que ledit accouplement (2a, 1a) comprend un bout d'arbre (2a) de l'un (2) desdits arbres, une extrémité de douille (1a) au bout voisin de l'autre (1) desdits arbres, ledit bout d'arbre (2a) étant logé dans l'extrémité de douiile (1a) et un mandrin en coin (5a), situé entre le bout d'arbre (2a) et l'extrémité de douille (1a), qui est détachable axialement de l'assemblage des arbres entre une première position dans laquelle le mandrin (5a) se coince entre l'extrémité de douille (1a) et le bout d'arbre (2a) et les relient en les entraînant, et une seconde position dans laquelle l'effet de coin est relâché et le bout d'arbre (2a) peut être retiré de l'extrémité de douille (1a) et dans laquelle les arbres (1, 2) peuvent être libérés l'un de l'autre.

2. Dispositif d'alimentation à vis suivant la revendication 1, caractérisé en ce que ledit arbre d'entraînement (1) comprend un tube (1) comportant une tige de connexion (5) pratiquement cylindrique qui forme un moyen pour déplacer ledit mandrin (5a) et qui est positionnée dans ledit tube (1).

3. Dispositif d'alimentation à vis suivant la revendication 2, caractérisé par un moyen (6) pour déplacer pratiquement axialement ladite tige de connexion (5) dans ledit tube.

4. Dispositif d'alimentation suivant la revendication 3, caractérisé en ce que ledit moyen (6) comprend un écrou (6) prévu pour venir en contact avec une face externe circonférentielle du bout opposé de ladite tige de connexion (5) par rapport audit mandrin (5a), ledit écrou (6) comprenant un moyen rotatif pour déplacer ledit mandrin (5a) axialement via une liaison dudit mandrin (5a) avec ladite tige de connexion (5).

5. Dispositif d'alimentation à vis suivant la revendication 4, caractérisé en ce que ladite tige de connexion (5) forme une seule pièce avec ledit mandrin (5a) et en ce que ledit mandrin (5a) comporte une pluralité de fentes pratiquement axiales (5c) qui découpent le mandrin (5a) en une pluralité de parties circonférencielles. pratiquement parallèles.

6. Dispositif d'alimentation à vis suivant l'une des revendications précédentes, caractérisé en ce que ledit mandrin (5a) présente une surface externe conique (5d) qui est prévue pour venir en contact avec la surface interne de l'extrémité de douille (1a).

7. Dispositif d'alimentation à vis suivant la revendication 6, caractérisé en ce que l'extrémité de douille a une surface interne de paroi pratiquement tronconique, le diamètre de ladite surface tronconique augmentant graduellement dans le sens dirigé vers ledit arbre mené (2).

8. Dispositif d'alimentation à vis suivant la revendication 6, caractérisé en ce que l'extrémité de douille (1a) présente une partie (1a) avec une surface pratiquement tronconique augmentant graduellement dans le sens dirigé vers ledit arbre mené (2) et prévue pour venir en contact avec ladite surface externe conique du mandrin (5a).

9. Dispositif d'alimentation suivant la revendication 8, caractérisé en ce que ladite extrémité de douille de l'arbre d'entraînement présente une surface interne conique ayant un diamètre interne minimal qui est pratiquement égal au diamètre externe minimal de la surface externe conique (5d) dudit mandrin (5a), ladite surface interne conique (1a) et ladite surface externe conique (5d) ayant chacune pratiquement le même angle au sommet.

10. Dispositif d'alimentation suivant la revendication 9, caractérisé en ce que la surface tronconique (1a) de ladite extrémité de douille (1a) a une longueur supérieure à celle de la surface conique dudit mandrin (5a).

11. Dispositif d'alimentation suivant la revendication 9 ou 10, caractérisé en ce qu'un écart radial (S) existe entre la surface externe conique dudit mandrin (5a) et la surface interne tronconique de ladite extrémité de douille (1a).

12. Dispositif d'alimentation suivant l'une des revendications précédentes, caractérisé en ce que ledit accouplement comprend encore deux pièces pratiquement annulaires (1c, 2b), une première pièce pratiquement annulaire (1c) étant prévue à ladite extrémité de douille (1a), ladite première pièce annulaire (1c) comportant des encoches opposées (7b) pratiquement en L, et la seconde pièce pratiquement annulaire (2b) comportant deux plots (7a) en saillie radialement vers l'intérieur à partir de la surface interne de ladite seconde pièce annulaire (2b), chacun desdits deux plots (7a) en saillie vers l'intérieur étant prévu pour s'engager d'une manière amovible et être retenu par les encoches correspondantes en L (7b).

13. Dispositif d'alimentation à vis suivant la revendication 12, caractérisé en ce que ladite pièce annulaire (7b) comprend une première et une seconde ouvertures pratiquement cylindriques (7g) qui sont prévues pour être alignées avec un trou pratiquement cylindrique (2g) situé sur ledit bout d'arbre (2a) dudit arbre de vis (2), ledit dispositif d'alimentation à vis comprenant encore une clavette allongée (7h) qui est prévue pour s'insérer dans lesdites ouvertures opposées (7g) et ledit trou (2g) afin de placer ladite seconde pièce annulaire (2b) sur ledit bout d'arbre (2a).

14. Dispositif d'alimentation à vis suivant la revendication 2 ou l'une des revendications précédentes dépendant de la revendicat ion 2, caractérisé en ce que ladite tige de connexion comprend une première partie pleine, pratiquement cylindrique (5i), ayant une extrémité inférieure présentant une ouverture qui la traverse, et une seconde partie définissant ledit mandrin (5a), dans lequel une extrémité haute de ladite seconde partie (5a) et une extrémité basse de ladite première partie (5i) sont reliées l'une à l'autre par une clavette pratiquement tronconique (5h) insérée dans des ouvertures alignées de ladite première partie et de ladite seconde partie.
